# EUROPEAN PATENT SPECIFICATION

(11) **EP 1 684 148 B1**
(45) Date of publication and mention of the grant of the patent: **11.06.2008**
(21) Application number: 06000647.5
(22) Date of filing: 12.01.2006
(51) Int. Cl.: G05D 23/24, B23K 3/03

(54) **Controller for battery powered heating device**
Regler für batteriebetriebene Heizvorrichtung
Régulateur pour dispositif de chauffage alimenté par une batterie

(30) Priority: 14.01.2005 US 36417
(43) Date of publication of application: 26.07.2006
(73) Proprietor: Hakko Corporation, Osaka-shi, Osaka (JP)
(72) Inventor: Miyazaki, Mitshuhiko, Naniwa-ku Osaka-shi Osaka (JP); Takeuchi, Hitoshi, Naniwa-ku Osaka-shi Osaka (JP); Ishihara, Toshinobu, Naniwa-ku Osaka-shi Osaka (JP)
(74) Representative: Müller-Boré & Partner Patentanwälte

(56) References cited:
- EP-A- 0 745 919
- WO-A-97/18504
- DE-A1- 10 217 336
- US-A1- 2002 117 491

## Description

### BACKGROUND OF THE INVENTION

**1. Field of the Invention:** The present invention is directed to the field of battery powered heating devices such as battery powered soldering irons. An exemplary version of such a device is disclosed in U.S. Patent Application No. 10/892,780, filed on July 15, 2004, titled: "Soldering Device with Cartridge Type Battery Pack". The present invention is more particularly directed to a controller to monitor and control the delivery of power to the heating device so as to provide the power necessary for utilization of the device yet reduce or minimize the battery drain and any unnecessary expenditure of power, and thereby maximize the battery life.

**2. General Background and State of the Art:** Soldering irons are used to make secure electrical connections by melting solder and allowing the solder to bond between two electrical devices such as wires and contact points of a circuit. A number of different types of soldering irons are in wide-spread use and have been available for a number of years. Desoldering devices are used to melt soldered connections and allow an electrical device to be removed and replaced.

Most soldering and desoldering devices are powered by electrical current, and particularly for industrial applications, the soldering devices use an AC power source. However, there are a few battery powered soldering devices that are available though their performance is somewhat limited. Examples are shown in U.S. Patent Nos. 2,973,422; 3,141,087; 3,141,956; 4,064,447 and 5,446,262. In addition, to provide flexibility in a soldering device that has no electrical power connection requirement, there are soldering devices that utilize a gaseous fuel to heat a soldering tip through for example a catalyst or an open flame, as shown for example in U.S. Patent Nos. 5,799,648 and 5,921,231. Relevant prior art is also disclosed in the document US 2002/0117491 A1.

While the devices according to the prior art may be able to provide cordless soldering capabilities, they do not provide control systems to minimize the amount of power utilization to extend the battery life. Accordingly, it would be desirable to provide a control system on a battery powered heating device which would minimize the unnecessary expenditure of battery power during periods when the device is turned on yet not being utilized.

### SUMMARY OF THE INVENTION

The invention is defined by independent claim 1. It is an object of the invention to provide a controller for a battery-powered heating device which is free from the problems residing in the

### prior art.

The present invention is directed to a controller and method for controlling a battery powered heating device such as a soldering or desoldering tool that includes a control circuit to control the delivery of power to a cartridge heating tip and to cycle the power to the cartridge heating tip during times of no use so as to minimize the amount of power expended to maintain the device in a ready or usable state. The present invention provides an easy controller for a mobile temperature-controlled battery-powered heating device the performance of which is not influenced by battery voltage dissipation as the control system supplies suitable cycles of power depending on both the battery voltage and the steps of heating job loads.

According to an aspect of the invention, a controller for a battery-powered heating device including a heater of which resistance changes with its temperature, and a battery for energizing the heater, comprises a heater resistance detector for detecting the resistance of the heater; a first power control means for raising the temperature of the heater; a second power control means for maintaining the temperature of the heater; a third power control means for decreasing the temperature of the heater; and a selecting means for selecting the first, second and third power control means in accordance with the resistance of the heater such that the first power control means is selected when the device is initially turned on or when the temperature of the heater is decreasing, the second control means is selected when the temperature of the heater remains constant, and the third power control means is selected when the temperature of the heater is increasing.

The controller may be further provided with a heater power supply means for supplying power to the heater to heat the heater, a sensing power supply means for supplying power to the heater to generate a signal indicative of the resistance of the heater, and a selector for selectively connecting the heater power supply means and the sensing power supply means to the heater.

The controller may further comprise a battery voltage detecting means for detecting the voltage of the battery, and a time control means for controlling the duration of power supply made by the heater power supply means.

A controller for a battery-powered heating device according to another aspect of the present invention comprises a battery voltage sensing circuit; a constant voltage power supply circuit; a heater power supply circuit; a heater voltage sensing circuit; and a programmed microprocessor controller having a control program, the programmed microprocessor controller connected to receive a battery voltage signal from the battery voltage sensing circuit and a heater voltage signal from the heater voltage sensing circuit, the programmed microprocessor controller controlling the constant voltage power supply circuit and the heater power supply circuit to cycle power to the heating device according to the control program.

The control program of the microprocessor controller may cycle power to the heating device according to the following STAGES: STAGE 1 of initial turning on the supply of power to the heater; STAGE 2 of maintaining the temperature of the heater; STAGE 3 of loading the heater; STAGE 4 of cooling down the heater; and the STAGES 2, 3 and 4 being performed in any order determined by the programmed microprocessor controller.

In the power on STAGE 1, the heater power supply circuit may be turned on for a duration determined by the microprocessor controller based upon the initial battery voltage, thereafter, the heater power supply circuit is turned off for a predetermined interval.

In the power on STAGE 1, the heater power supply circuit may be turned off for a predetermined interval and thereafter the controller proceeds to maintain temperature STAGE 2.

The controller may further comprise a sensing subroutine in which the constant voltage power supply circuit is turned on for a sensing interval, the temperature of the heater is measured based on a voltage Vn determined by the heater voltage sensing circuit, and then the constant voltage power supply is turned off.

As to the STAGEs of the control program of the microprocessor controller for cycling power to the heating device, the following functions may be performed in each STAGE. In the power on STAGE 1, the heater power supply circuit may be turned on for a duration determined by the microprocessor controller based upon the initial battery voltage; thereafter, the heater power supply circuit may be turned off for a predetermined interval. In the maintain temperature STAGE 2, the heater power supply circuit may be cycled on and off for short intervals to maintain the temperature of the heater and a predetermined value as measured by the heater voltage sensing circuit. In the heater loaded STAGE 3, the heater power supply circuit may be turned on for a predetermined estimation of the duration of an average use task, generally in the range of 5 to 10 seconds; thereafter, the heater power supply circuit may be turned off for a predetermined interval. In heater cool down STAGE 4, the heater power supply circuit may be turned off for a predetermined interval to allow the heater to cool down.

In the controller, the programmed microprocessor controller may receive a heater voltage signal "Vn" which is processed then stored as "Vp", the following processing consisting of comparing new Vn to Vp , the controller determining the following STAGE based on the processing.

In the controller, after completion of a sensing subroutine, the controller may selects: maintain temperature STAGE 2 if Vn equals Vp, heater loaded STAGE 3 if Vn is greater than Vp, and heater cool down STAGE 4 if Vn is less than Vp.

In the controller, during the maintain temperature STAGE 2, the heater power may be turned on for an interval in the range of about 300 to 400 milliseconds and then turned off for an interval in the range of about 600 to 700 milliseconds.

In the controller, during the maintain temperature STAGE 2, the on-off cycling of heater power may be repeated.

The controller may further comprise a variable resistor connected to the programmed microprocessor controller so as to allow an operator to vary the controlled temperature of the heater.

The controller may further comprise a battery voltage level monitor to turn off the heating device if the battery voltage does not exceed a selected level.

The controller may further comprise a visual indicator to provide an indication of the ready status of the heating device.

A battery powered soldering device according to another aspect of the present invention, comprises a handle; a battery inserted in the handle; a cartridge heating tip secured to the handle; a power supply controller for cycling power from the battery to the cartridge heating tip according to a control program by selecting from a group of steps, including: a power on step; a maintain temperature step; a heater loaded step; a heater cool down step; and the maintain temperature, heater loaded and heater cool down steps being performed in any order determined by the programmed microprocessor controller.

The power supply controller of the above-mentioned battery powered soldering device may further comprise a battery voltage sensing circuit; a constant voltage power supply circuit; a heater power supply circuit; a heater voltage sensing circuit; and a programmed microprocessor controller having a control program, the programmed microprocessor controller connected to receive a battery voltage signal from the battery voltage sensing circuit and a heater voltage signal from the heater voltage sensing circuit, the programmed microprocessor controller controlling the constant voltage power supply circuit and the heater power supply circuit to cycle power to the heating device according to the control program.

A power supply and control system for a heating device having a resistance heater according to yet another aspect of the present invention, comprises a battery power source; a battery voltage measuring circuit; a heating power supply circuit; a sensing power supply circuit; a pair of switches for changing between the heating power supply circuit and the sensing power supply circuit; a voltage amplifying circuit for sensing heater resistance; and a controller processor connected to the battery voltage measuring circuit, the pair of switches and the voltage amplifying circuit, the controller processor programmed with a temperature controlling and battery saving logic program to activate the pair of switches, thereby changing the heating power supply to the resistance heater, dependant on the monitored battery power and the heater resistance.

These and other objects, features, aspects, and advantages of the present invention will become more apparent from the following detailed description of the preferred embodiments/examples with reference to the accompanying drawings.

### BRIEF DESCRIPTION OF THE DRAWINGS

Fig. 1 is a side view of a heating device according to an embodiment of the present invention, including a battery pack and a circuit board.

Fig. 2 is a wiring schematic diagram of an electric circuit of the battery powered heating device of Fig. 1.

Fig. 3A, 3B and 3C are charts depicting various states of operation of a control system provided in the heating device.

Fig. 4 is a flow chart of the basic operation and logic of the controller for the control system.

Fig. 5 is a flow chart of the sensing subroutine operation of the control system.

Fig. 6 is a flow chart of STAGE 1 subroutine for the control system.

Fig. 7 is a flow chart of STAGE 2 subroutine of the control system.

Fig. 8 is a flow chart of STAGE 3 subroutine of the control system.

Fig. 9 is a flow chart of STAGE 4 subroutine of the control system.

### DETAILED DESCRIPTION OF THE PREFERRED EMBODIMENT

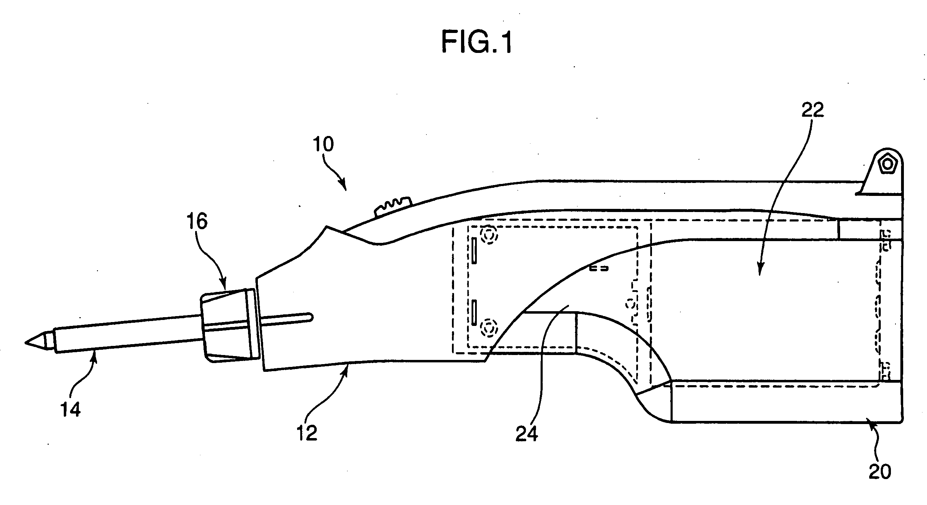

Fig. 1 depicts a side view of a battery powered heating device or soldering device 10 according to an embodiment of the present invention. The heating device 10 includes a handle 12 onto which a cartridge heating tip 14 is mounted and secured with a securing nut 16. The heating device preferably includes a removable battery pack and control system 20 which may be removed for charging or replacement of the battery or substitution of a charged battery pack. The battery cartridge 20 includes a battery 22 and a circuit board 24. The circuit board 24 includes the primary components to connect to the battery, control the output of power and transmit power to the heating element of the cartridge heating tip 14. The cartridge heating tip 14 generally includes a coil resistance heating element to heat an iron tip.

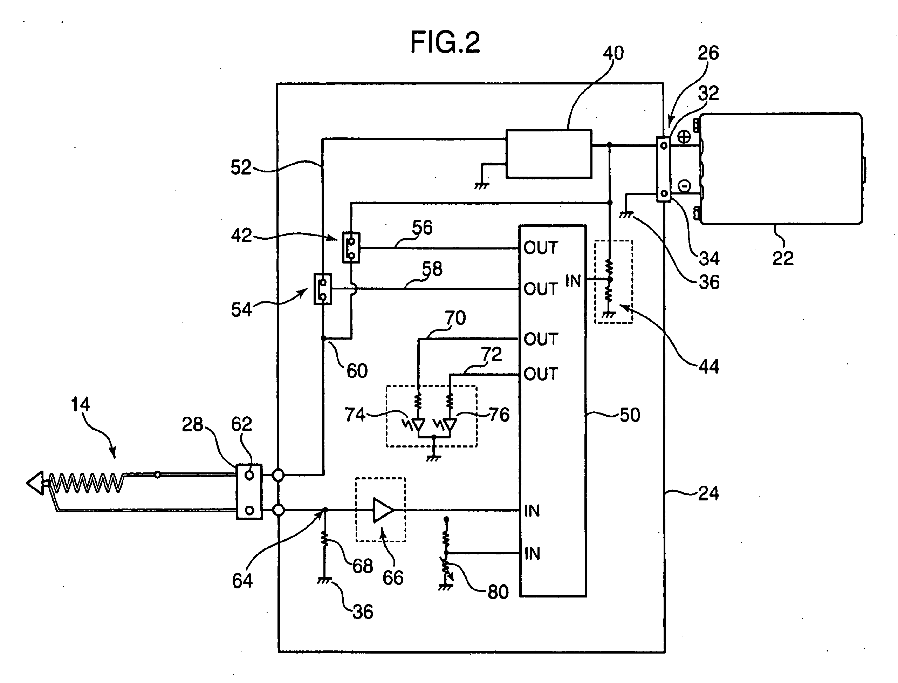

Fig. 2 depicts a schematic representation of the electrical control circuit within the heating device of Fig. 1. As depicted in Fig. 2, the battery 22 is interconnected to the circuit board 24 at a connecter 26. The output of the circuit board 24 is connected to the heating cartridge 14 at connector 28. The electrical control circuit is principally configured to be mounted upon the circuit board 24 with the various components of the electrical control circuit attached thereto.

The connector 26 has a positive terminal 32 and a negative terminal 34 to be interconnected to the respective poles of the battery 22. The negative terminal 34 is connected to ground as shown at 36. The positive terminal 32 is connected to a junction that directs power to a constant voltage power supply circuit 40 and separately to a power field effect transistor ("power FET") 42. As common in the industry, these connections are all made via traces within the circuit board 24.

Power from the junction is also delivered to a battery voltage measuring circuit 44. The battery voltage measuring circuit 44 has an output to a microprocessor 50 mounted on the circuit board 24. The battery voltage measuring circuit 44 continuously monitors the battery voltage providing a voltage level signal to the microprocessor 50 which will turn off the system when the battery voltage drops below a predetermined level. In addition, the battery voltage at the start of a cycle or a supply is measured and reported to the microprocessor 50, as the voltage level of the battery impacts the calculation of the initial "on time" length to initially heat the cartridge heating tip 14 to an operating temperature, as will be discussed below.

The constant voltage power supply circuit 40 provides a constant output voltage, for example, 3.3 volt DC output, on sensor power line 52 which is delivered to a sensor field effect transistor ("sensor FET") 54. Both the power FET 42 and the sensor FET 54 receive control signals from the microprocessor 50 on lines 56 and 58, respectfully. The output of the power FET 42 and the sensor FET 54 are merged at junction 60 and delivered, via the positive terminal 62 of the connector 28, to the cartridge heating tip 14.

Microprocessor 50 also has two outputs 70 and 72 which are directed to multi colored light emitting diodes ("LEDs") 74 and 76, respectively to provide a visual indication of the on status and ready status of the battery powered heating device 10.

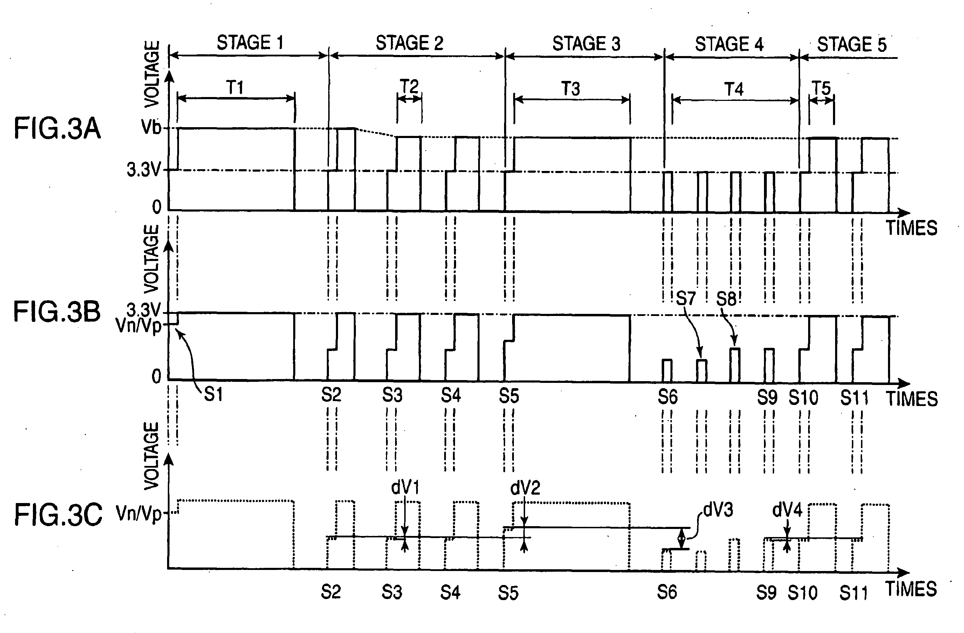

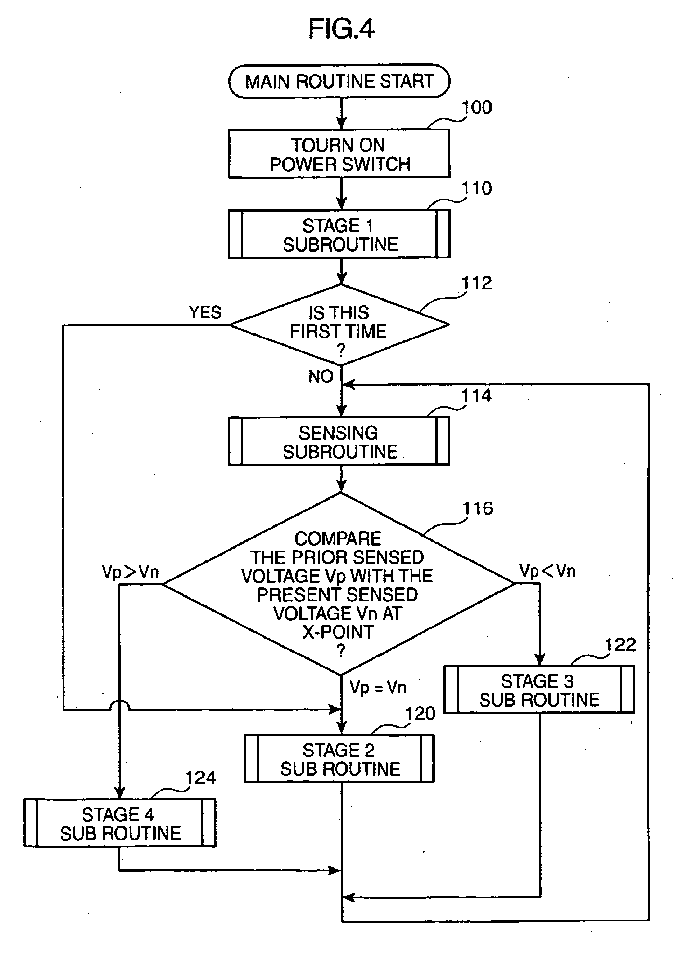

Microprocessor 50 controls the cycling or supplying of the heating power and sensor power to the heating tip 14 by the respective activation of the power FET 42 and/or the sensor FET 54. Generally, the microprocessor 50 is programmed to control the delivery of power according to a fixed sequence that may be varied as the voltage level of the battery decreases and the desired tip temperature is selected. The sequencing is discussed in further detail below with respect to Figs. 3 and 4.

The control circuit also includes a voltage amplifying circuit 66 which takes a signal off of the junction 64 (X-point) connected to the negative post of the connector 28 and, through a resistor 68, to ground 36, to provide a sensed signal to the microprocessor 50. This sensed signal input to the microprocessor 50 allows the microprocessor 50 to calculate or estimate the temperature of the cartridge heating tip 14. The voltage amplifying circuit 66 and the grounded resistor 68 constitute a heater resistance detector.

A variable resistor 80 may be included on the circuit board 24 to provide an input voltage Vc to the microprocessor 50. The variable resistor 80 may be used by the temperature control circuit to vary the output temperature of the heating device for different types of cartridges or soldering tips. Thus, certain types of tips may require less power to maintain a specified tip temperature and for these types of tips the variable resister can be used to decrease the power delivered to the tip by the control system.

Fig. 3A graphically depicts the various voltage wave forms at the junction 60 in the circuit of Fig. 2 for each of the respective STAGE operations. Fig. 3B graphically depicts the voltage wave form at the junction 64 of the circuit of Fig. 2 for each of the respective STAGE operations. This wave form is trimmed at the maximum limit of 3.3 volts. Fig. 3C graphically depicts the voltage change for controlling the heating power supply caused by the switching of the microprocessor 50 for each of the respective STAGE operations. Each of the graphs of 3A, 3B and 3C has voltage values on the Y-axis and time on the X-axis. The time axis is further broken down into five "STAGEs". Each STAGE represents a time interval and a specific controlled operation for the heating device 10.

As discussed in more detail below, STAGE 1 represents a time segment immediately following when the heating device 10 is turned on. STAGE 2 is a time segment during which the heating device 10 is turned on, but not actively in use, and the temperature of the cartridge heating tip 14 is maintained at a determined level. STAGE 3 is a time segment during which the heating device 10 is being used, for example to solder or de-solder a connection. STAGE 4 is a time segment immediately after a use (as in STAGE 4). STAGE 5 is effectively a repeat of STAGE 2, a time segment during which the heating device 10 is turned on, but not actively used and the tip temperature is adjusted then maintained at a determined level.

Figs. 3A, 3B and 3C include the following nomenclature. For the voltage values on the Y-axis, "Vb" is the power supply voltage directly from battery 22 which may decrease as the battery is used. "Vn" is the voltage value at the junction 64 that is sensed by voltage amplifying circuit 66, and which is dependent on the resistance of the cartridge heater tip 14, a function of its temperature. Once "Vn" is determined, it is stored as "Vp", the voltage value at junction 64 just before a new value "Vn" is sensed, i.e., the immediately prior "Vn".

Preferably, the battery is a Lithium Ion battery, wherein "Vb" will change from approximately 7.2 volts at an ordinary full charged voltage to approximately 5.8 volts. The microprocessor 50 is programmed to shut off the heating power supply when the battery voltage drops lower than 5.8 volts. The voltage of the constant voltage power supply for sensing is set at 3.3 volts in this configuration, however, other voltage levels could be provided by the constant voltage power supply circuit 40. Further, it is needless to say that any battery other than lithium ion battery can be used irrespective of chargeable battery or unchargeable battery.

On the X-axis, "T1" is the time length during which the heating power is supplied when the cartridge heating tip 14 is under a start-up condition just after a main power switch is turned on. T1 is determined by the microprocessor based upon the sensed value of Vb, the power supply voltage. "T2" is the time length during which the heating power is supplied when the cartridge heating tip 14 is in a "stand-by" condition after the initial start-up condition or after a loaded condition. The duration of T2 is also calculated by the microprocessor 50 based on the value of Vb. "T3" is the time length during which the heating power is supplied when the cartridge heating tip 14 is actually being used for soldering work, that is, the cartridge heating tip 14 is under a loaded condition. The value of T3 is set within the microprocessor to a duration in the range of approximately 5 to 10 seconds, a pre-determined time estimate of the average length of time that the device will be used to solder or desolder a connection. "T4" is the total interval during which no heating power is supplied when the cartridge heating tip 14 is cooling down after over-heating. "T5" is the time period during which heating power is supplied when the cartridge heating tip 14 is in a stand-by condition. T5 is thus similar to T2.

"S1" to "S11" are the sensing time, timing sequential numbers. During each sensing time, the constant 3.3 volts power is cycled or supplied to the cartridge heating tip 14. All sensing time lengths within all STAGES are set at a predetermined duration, for example, 25 milliseconds. However, other time lengths could be used, for example, any duration in the range of 20 to 50 milliseconds could be used.

The graph of Fig. 3C depicts the values of "dV", which is the difference between Vn and Vp for each sensed interval. dV is determined by the microprocessor 50 using the simple equation: dV = Vn - Vp.

Fig. 4 is a basic flow chart for the control algorithm used by the microprocessor 50 to control the temperature, and power usage, of the cartridge heating tip 14 by proceeding through the various STAGES. At step 100, the main power switch for the battery powered heating device 10 is turned "ON." This initiates STAGE 1, the interval when the cartridge heating tip 14 is heated under the start-up full power supply to raise the temperature of the tip to a working level. As shown in Figs. 3A and 3B, there is an initial period S1 during which sensor FET 54 is turned on and power FET 42 is turned off, so that 3.3 volts is delivered to the cartridge heating tip 14. This allows the control system to sense the temperature of the cartridge heating tip 14 and record a value Vn. After the interval S1, sensor FET 54 is turned off, power FET 42 is turned on and the full power from the battery is delivered to the tip 14 for the interval T1, a time length determined by the microprocessor 50.

During the initial part of STAGE 1, the battery voltage measuring circuit 44 senses the battery voltage Vb. The time length T1 is determined based on the Vb value by the microprocessor 50. The sensed voltage value Vn during the initial sensing period S1 is not used for determination of the length of interval T1. In this starting step, just after the main switch is turned on, T1 has a duration sufficient to get the high tip temperature within the shortest time for quickly starting a job. After the end of T1, there is an interval within STAGE 1 during which both power FET 42 and sensor FET 54 are shut off, and no power is supplied to cartridge heating tip 14.

The control logic as shown in Fig. 4 then proceeds to decision point at step 112, at which it is determined whether the power has just been turned on (YES) or if the power has been on (NO). If the power has just been turned on (YES), after STAGE 1 is completed, the controller proceeds to the STAGE 2 subroutine.

If the determination at decision point 112 is "NO", then the control program proceeds to its sensing subroutine 114. In the sensing subroutine 114, the microprocessor receives a signal indicative of the present sensed voltage Vn and at the comparison point at step 116 compares that voltage value Vn to the stored value Vp of the immediately previous sensing of Vn. If Vp=Vn, then the control program proceeds to the STAGE 2 subroutine of step 120. If Vp<Vn, then the control program proceeds to the STAGE 3 subroutine of step 122. If Vp>Vn, then the control program proceeds to STAGE 4 subroutine of step 124. Upon the completion of the STAGE 2, STAGE 3 or STAGE 4 subroutines, the control system returns to the beginning of the sensing subroutine 114, until, or unless, the power is turned off. In the comparison of the voltage Vn with Vp, which are the voltage values within the same device, the controller logic can neglect small differences among different devices. Further, these values of Vn and Vp are size comparisons only, such as bigger, equal or smaller comparison, so they can be performed with the simple circuit.

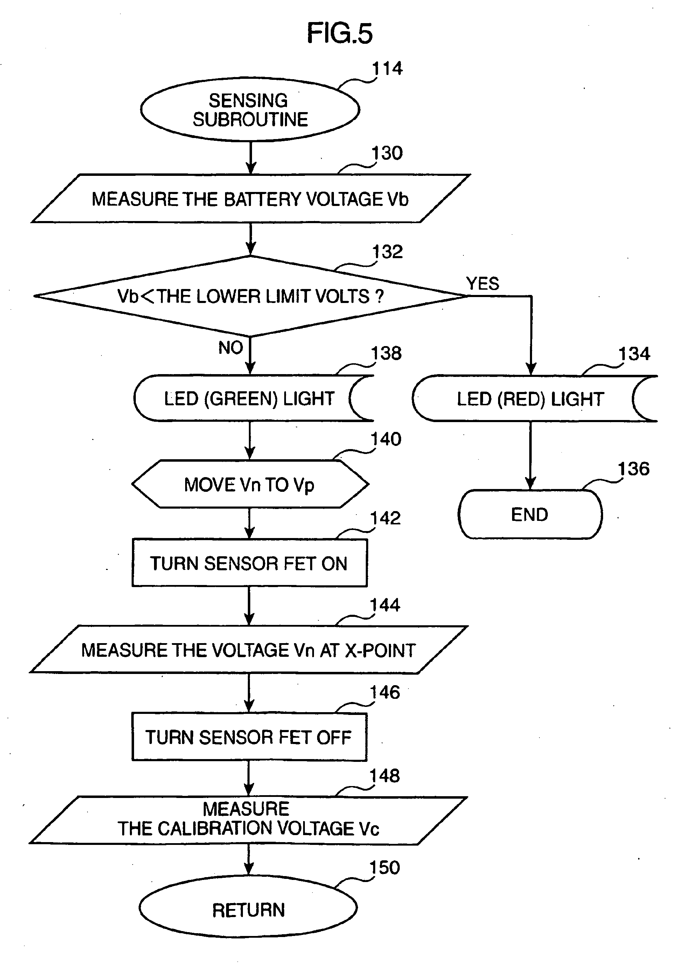

Fig. 5 depicts the sensing subroutine 114 of the control system. The sensing subroutine 114 starts with the measuring of the battery voltage Vb at step 130. After the battery voltage Vb is measured, at decision point 132 it is determined whether the voltage of the battery is greater than or less than the lower limit on the voltage. If the voltage for the battery Vb is lower than the lower limit, a YES decision, then the sensing subroutine 114 proceeds to light the red LED light at 134 and then end the subroutine at 136 by turning off the heating device 10. Thus, when the battery voltage Vb drops below a predetermined level the heating device cannot be operated and the battery must be either replaced or recharged.

However, when the decision at point 132 is that the battery voltage is greater than the lower limit on the voltage, then the sensing subroutine 114 proceeds to step 138 in which the LED green light is turned on and then the sense value of Vn is tramsferred to a memory location and relabeled as Vp, for use as the immediately preceding sensed voltage, at step 140. The sensing subroutine 114 then turns on sensor FET 54, as shown at step 142, to allow the measurement of the voltage Vn at step 144. After the Vn is measured, at step 146 the sensor FET 54 is turned off. The sensing subroutine then measures the calibration voltage Vc at step 148 and thereafter exits the subroutine at step 150. Exiting the subroutine at step 150 causes the control system to proceed into the decision point 116 of Fig. 4, at which the control system decides which of the STAGE 2, 3 or 4 should be initiated.

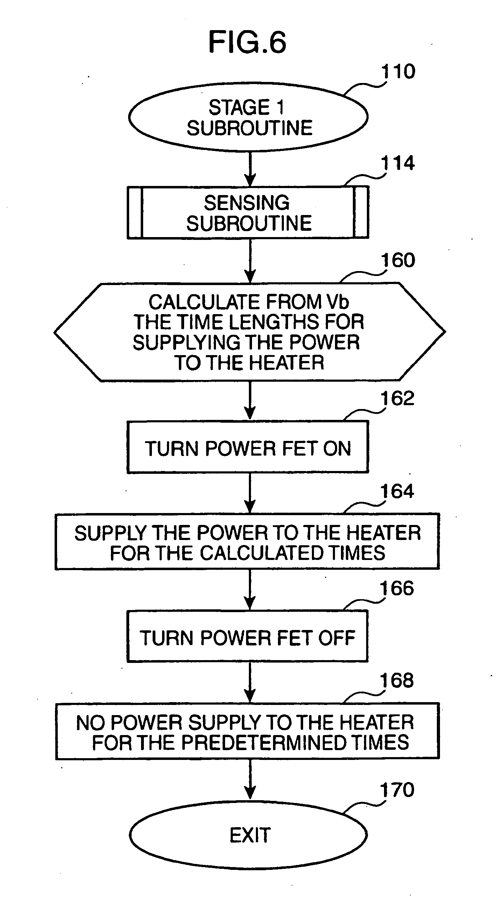

Fig. 6 depicts a flow of the STAGE 1 subroutine control logic. The STAGE 1 subroutine is shown at step 110 within Fig. 4, and thus starts at 110 at the top of Fig. 6. The STAGE 1 subroutine starts by processing through the sensing subroutine as described above with respect to Fig. 5. At the end of the sensing subroutine, STAGE 1 proceeds to step 160 in which there is a calculation of the time length T1 necessary for supplying power to the heater tip at the initiation of an initial "on" condition, as shown at step 160. Once the determination is made, the power FET 42 is turned on at step 162. At step 164, power is supplied to the heater tip for the time T1 calculated with the battery voltage Vb at step 160. At the end of the time T1 calculated at step 160, the power FET 42 is turned off as shown at step 166, and the STAGE 1 subroutine proceeds to step 168 in which there is a predetermined time interval during which no power is supplied to the heater tip as set by microprocessor 50. Upon completion of the interval of step 168, the STAGE 1 subroutine is exited at step 170. As shown in Fig 4, at the end of the STAGE 1 subroutine, the control system will proceed to the STAGE 2 subroutine 120.

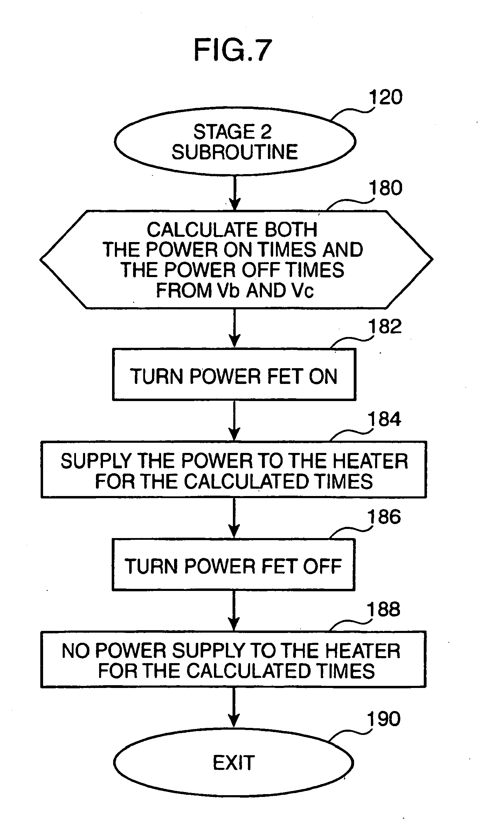

Fig. 7 depicts the STAGE 2 subroutine 120 in Fig. 4. In the STAGE 2 subroutine 120, the control system first calculates both a power on time (T2) and a power off time based upon the values of Vb, the battery voltage and Vc, the calibration voltage as shown at step 180. Next, subroutine 120 turns on the power FET 42 at step 182. At step 184, the power is supplied to the heater tip for the calculated time T2. After the calculated time, power FET 42 is turned off at step 186 and there is a period at step 188 during which no power is supplied to the heater for a specific time period. This STAGE 2 cycle may be repeated one or more times (shown as three times in Fig. 3), to maintain the cartridge heating tip 14 temperature at a desired level.

STAGE 2 is thus the control process when the cartridge heating tip 14 is under the stand-by status. During STAGE 2, the cartridge heating tip 14 is not being used for soldering or desoldering work, that is, it is under the "no load" condition and the tip temperature is maintained constant at the target temperature. The tip temperature is maintained by balancing the heat supply and the heat dissipation through cycling or supplying of the power on intervals "T2" and the following power off intervals. The heat supply required is determined by the time length for the heating power supply T2 that is calculated based on the value of Vb. By way of example, T2 may be in the range of 300 to 400 milliseconds. Each repeating cycle in STAGE 2 may last a total of about 1,000 milliseconds, which includes a 25 millisecond sensing times, such as S2, S3 or S4, and approximately 300 to 400 milliseconds of power supply times T2, and the remaining 700 to 600 milliseconds of interval no power supply time. The battery power is saved in STAGE 2 by reducing the power consumption and the life of the battery is longer than an ordinary battery powered heating device. Further, the saturating tip temperature or the target temperature may be adjusted by the variable resistor 80 of Fig. 2.

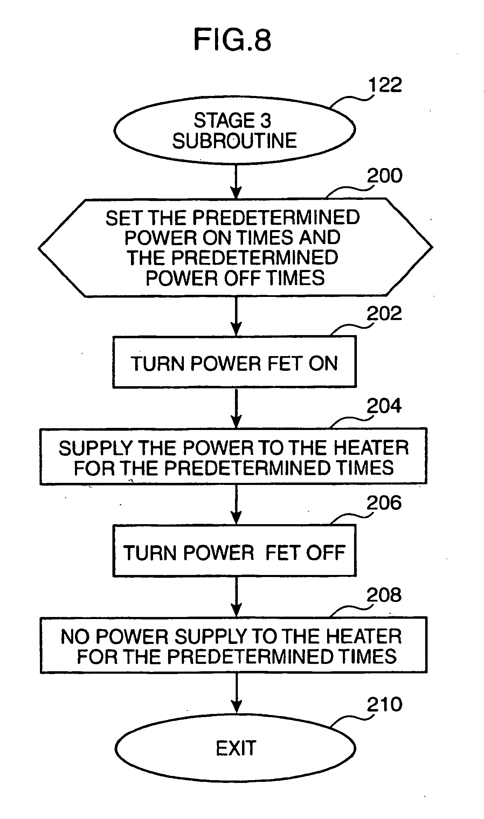

Fig. 8 depicts a flow of the STAGE 3 subroutine 122 of Fig. 4. In the STAGE 3 subroutine 122, the control system initially sets the predetermined "power on" time T3 and the predetermined "power off" time at step 200. After these are determined, the control system turns power FET 42 on at step 202. Thereafter, at step 204, power is continued to be supplied to the cartridge heater tip for the longer time period T3 determined at step 200. At the end of this time T3, the process proceeds to step 206 at which the power FET 42 is turned off. The logic then proceeds to step 208 at which no power is supplied to the cartridge heater tip for an off time determined at step 200. After completion of the no power time interval of step 208, the logic proceeds to the subroutine exit at 210, and from there proceeds back to sensing subroutine 114 as shown in Fig. 4.

STAGE 3 is thus the process when the soldering cartridge heating tip 14 is used for soldering, that is, under the loaded condition. When the system detects the fact that dV = Vn - Vp > 0, that is Vn > Vp, this fact means the detection of the decreased change of heater resistance value and means the detection of a tip temperature drop, such as at decision point 116 in Fig. 4 and dV2 from Fig. 3C, the heating power supply is turned on to the heater for approximately 5 to 10 seconds or longer time interval, or a predetermined time interval estimated for an average soldering or desoldering process. Consequently, this heating device for example a soldering iron has good heat recovery performance and can it can perform a continuous soldering job.

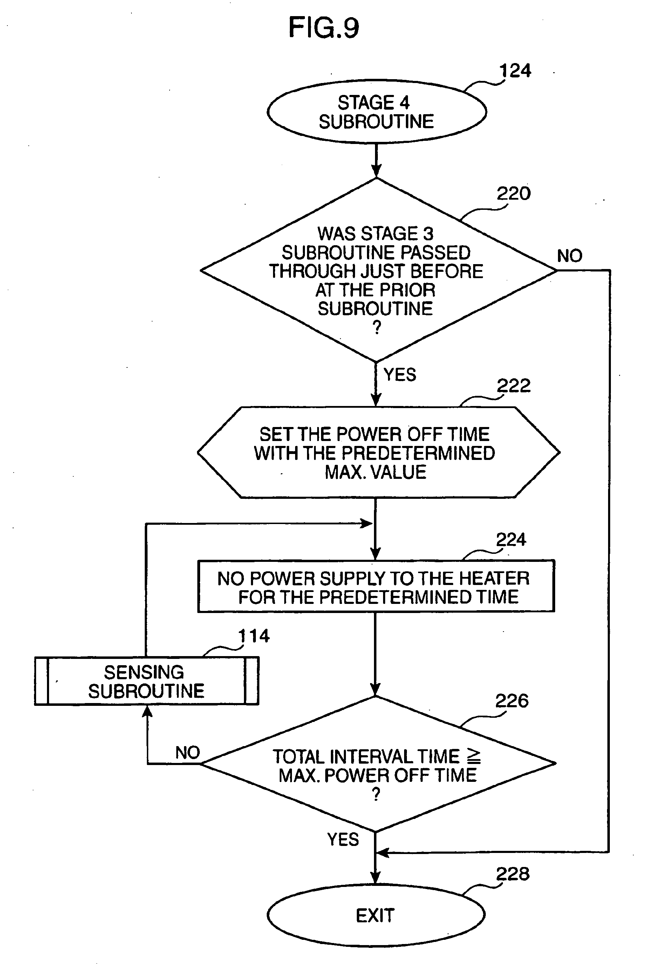

Fig. 9 depicts the STAGE 4 subroutine in flow chart format. The STAGE 4 subroutine 124 from Fig. 4 as detailed in Fig. 9 starts with a determination of whether the STAGE 3 subroutine has been completed just before the beginning of STAGE 4, as shown at step 220. If it is determined that STAGE 3 subroutine has just been completed, then the decision goes to step 222 at which the power off time for a predetermined maximum value is set. The process then proceeds to step 224, an interval where no power is supplied to the heater for a predetermined period of time. Once the predetermined time has expired at step 224, the system proceeds to step 226, in which the total interval time is determined to be greater than or equal to the maximum power off time. If the total interval time has not exceeded the maximum power off time, then the system goes to the sensing subroutine 114, from which it may revert back to a point at which the power supply to the heater is off for a predetermined time at step 224. If the total interval time is equal to or greater than the maximum power off time at step 226, then the system proceeds to the subroutine exit at step 228 and proceeds to the sensing subroutine at step 114 in Fig. 4. However, in STAGE 4, if at step 220 it is determined that the STAGE 3 subroutine has not proceeded as the immediately prior subroutine, then the system proceeds to the exit subroutine in step 228.

STAGE 4 thus shows the process when the soldering cartridge heating tip 14 is not being used for soldering work just after a loaded condition (STAGE 3) and the tip temperature is overheated. The power supply is shut off for several time intervals to lower the tip temperature. The total interval time T4 is approximately 5 seconds. This STAGE 4 is controlled when dV = Vn - Vp < 0, that is Vn < Vp, such as dV3 in Fig. 3C. One cycle of STAGE 4 is comprised of 25 milliseconds of the sensing time followed by one second of interval time and repeating this cycle until 5 seconds of the interval time has expired. The sensed voltage value from sensing time S7 and S8 are not used for determination of the next STAGE. The next STAGE is determined by dV4 that is calculated from Vn after the 5 seconds of total interval time using Vp from just before the 5 seconds of total interval time of STAGE 4.

As will be appreciated from a review of Fig. 4, the process illustrated in the graphs of Figs. 3A, 3B and 3C do not necessarily proceed from STAGE 1 through to STAGE 4 sequentially. Instead, after the initial power on process of STAGE 1, the sensing subroutine 114 decides which of the STAGES, STAGE 2, STAGE 3 or STAGE 4, should be initiated.

The foregoing embodiments are described with reference to a soldering device or a desoldering device as a heating device. However, the present invention is not limited to soldering or desoldering devices, but is applied to other devices, such as styrene foam cutter, docking tool, electric heating pen for pyrography.

The foregoing description is provided to describe the present invention to those skilled in the art but is not intended to limit the scope of the invention which is to be defined bythe claims.

## Claims

1. A controller for a battery-powered heating device including a heater (14) of which resistance changes with its temperature, and a battery (22) for energizing the heater, the controller comprising:
a heater power supply means for supplying power to the heater (14) to heat the heater (14);
a sensing power supply means for supplying power to the heater (14) to generate a signal indicative of the resistance of the heater (14);
control means (50) for controlling the temperature of the heater (14),
**characterized in that** the controller further comprises:
a selector (42, 54) for selectively connecting the heater power supply means and the sensing power supply means to the heater (14);
a battery voltage detecting means (44) for detecting the voltage of the battery (22);
whereby the control means (50) is responsive to a battery voltage signal from the battery voltage detecting means (44) and a signal indicative of the resistance of the heater (14),
wherein the control means (50) controls the heater power supply means to turn on for a duration determined based upon the initial battery voltage.

2. The controller of claim 1, wherein the control means (50) includes a time control means for controlling duration of power supply made by the heater power supply means.

3. The controller of claim 1 or 2, wherein the sensing power supply means includes a constant voltage generating means (40) for generating a constant voltage to be applied to the heater (14), and a voltage detector (64) for detecting voltage dependent on the resistance of the heater (14) and the constant voltage.

4. The controller of claim 3 wherein the control means (50) includes a microprocessor controller (50) having a control program which cycles power to the heating device according to the following STAGEs:
STAGE 1 of turning on the power supply;
STAGE 2 of maintaining the temperature;
STAGE 3 of loading the heater (14);
STAGE 4 of cooling down; and
the STAGES 2, 3 and 4 being performed in any order determined by the programmed microprocessor controller (50).

5. The controller of claim 4, wherein in STAGE 1, the heater power supply means is turned off for a predetermined interval and thereafter the controller proceeds to STAGE 2.

6. The controller of claim 5, further comprising:
a sensing subroutine in which the constant voltage generating means (40) is turned on for a sensing interval, the temperature of the heater (14) is measured based on a voltage Vn determined by the voltage detector (64), and then the constant voltage generating means (40) is turned off.

7. The controller of claim 4, 5, or 6, further comprising:
in STAGE 1, the heater power supply means is turned on for a duration determined by the microprocessor controller (50) based upon the initial battery voltage; thereafter, the heater power supply means is turned off for a predetermined interval;
in STAGE 2, the heater power supply means is cycled on and off for short intervals to maintain the temperature of the heater (14) and a predetermined value as measured by the voltage detector (64);
in STAGE 3, the heater power supply means is turned on for a predetermined estimation of the duration of an average use task, generally in the range of 5 to 10 seconds; thereafter, the heater power supply means is turned off for a predetermined interval;
in STAGE 4, the heater power supply means is turned off for a predetermined interval to allow the heater (14) to cool down.

8. The controller of claim 7, wherein the programmed microprocessor controller (50) receives a heater voltage signal "Vn" which is processed then stored as "Vp" , the processing consisting of comparing Vn to Vp, the controller determining the following STAGE based on the processing.

9. The controller of claim 8, wherein after completion of a sensing subroutine, the controller selects:
STAGE 2 if Vn equals Vp,
STAGE 3 if Vn is greater than Vp, and
STAGE 4 if Vn is less than Vp.

10. The controller of claim 6, 7, 8, or 9, wherein during STAGE 2, the heater power is turned on for an interval in the range of about 300 to 400 milliseconds and then turned off for an interval in the range of about 600 to 700 milliseconds.

11. The controller of claim 10, wherein during STAGE 2, the on-off cycling of heater power is repeated.

12. The controller of any one of the preceding claims, further comprising:
a variable resistor connected to the programmed microprocessor controller so as to allow an operator to vary the controlled temperature of the heater (14).

13. The controller of any one of claims 1 to 12, further comprising:
a battery voltage level monitor (44) to turn off the heating device if the battery voltage does not exceed a selected level.

14. The controller of any one of claims 1 to 12, further comprising:
a visual indicator to provide an indication of the ready status of the heating device.

15. A battery powered soldering device, comprising:
the controller according to any one of claims 1 to 12;
a handle (12);
a battery (22) inserted in the handle (12); and
a cartridge heating tip (14) secured to the handle (12).

## Patentansprüche

1. Steuerung bzw. Regelung für eine batteriebetriebene Heizvorrichtung, die ein Heizteil (14), dessen Widerstand sich mit der Temperatur desselben ändert, und eine Batterie (22), die das Heizteil mit Energie versorgt, beinhaltet, wobei die Steuerung bzw. Regelung umfasst:
ein Heizteilleistungs- bzw. -energieversorgungsmittel, das das Heizteil (14) mit Leistung bzw. Energie versorgt, um das Heizteil (14) zu erhitzen;
ein Erfassungsenergieversorgungsmittel, das das Heizteil (14) mit Energie versorgt, um ein Signal zu erzeugen, das den Widerstand des Heizteils (14) angibt;
ein Steuerungs- bzw. Regelungsmittel (50), das die Temperatur des Heizteils (14) steuert bzw. regelt,
**dadurch gekennzeichnet, dass** die Steuerung bzw. Regelung des Weiteren umfasst:
ein Auswählteil (42, 54), das das Heizteilenergieversorgungsmittel und das Erfassungsenergieversorgungsmittel selektiv mit dem Heizteil (14) verbindet;
ein Batteriespannungsdetektiermittel (44), das die Spannung der Batterie (22) detektiert;
wodurch das Steuerungs- bzw. Regelungsmittel (50) auf ein Batteriespannungssignal aus dem Batteriespannungsdetektiermittel (44) und ein Signal, das den Widerstand des Heizteils (14) angibt, anspricht,
wobei das Steuerungs- bzw. Regelungsmittel (50) das Heizteilenergieversorgungsmittel steuert bzw. regelt, um es während einer Dauer, die auf Grundlage der anfänglichen Batteriespannung bestimmt wird, anzustellen.

2. Steuerung bzw. Regelung nach Anspruch 1, wobei das Steuerungs- bzw. Regelungsmittel (50) ein Zeitsteuerungs- bzw. Regelungsmittel beinhaltet, das die Dauer der von dem Heizteilenergieversorgungsmittel bewerkstelligten Energieversorgung steuert bzw. regelt.

3. Steuerung bzw. Regelung nach Anspruch 1 oder 2, wobei das Erfassungsenergieversorgungsmittel ein Konstantspannungserzeugungsmittel (40), das eine an dem Heizteil (14) anzulegende Konstantspannung erzeugt, und einen Spannungsdetektor (64), der die Spannung abhängig vom Widerstand des Heizteils (14) und der Konstantspannung detektiert, beinhaltet.

4. Steuerung bzw. Regelung nach Anspruch 3, wobei das Steuerungs- bzw. Regelungsmittel (50) eine Mikroprozessorsteuerung bzw. Regelung (50) mit einem Steuerungs- bzw. Regelungsprogramm beinhaltet, das für die Heizvorrichtung Energie entsprechend den folgenden Phasen bzw. Stufen bereitstellt:
in Phase 1 Anstellen der Energieversorgung;
in Phase 2 Beibehalten der Temperatur;
in Phase 3 Laden des Heizteils (14);
in Phase 4 Abkühlen;
wobei die Phasen 2, 3 und 4 in einer beliebigen Reihenfolge ausgeführt werden, die von der programmierten Mikroprozessorsteuerung bzw. Regelung (50) bestimmt wird.

5. Steuerung bzw. Regelung nach Anspruch 4, wobei in Phase 1 das Heizteilenergieversorgungsmittel während eines vorbestimmten Intervalls abgestellt wird und die Steuerung bzw. Regelung sodann zu Phase 2 übergeht.

6. Steuerung bzw. Regelung nach Anspruch 5, des Weiteren umfassend:
eine Erfassungssubroutine, in der das Konstantspannungserzeugungsmittel (40) während eines Erfassungsintervalls angestellt wird, die Temperatur des Heizteils (14) auf Grundlage einer von dem Spannungsdetektor (64) bestimmten Spannung Vn gemessen wird und sodann das Konstantspannungserzeugungsmittel (40) abgestellt bzw. abgeschaltet wird.

7. Steuerung bzw. Regelung nach Anspruch 4, 5 oder 6, des Weiteren umfassend:
in Phase 1 wird das Heizteilenergieversorgungsmittel während einer Dauer angestellt, die von der Mikroprozessorsteuerung bzw. Regelung (50) auf Grundlage der anfänglichen Batteriespannung bestimmt wird, woraufhin das Heizteilenergieversorgungsmittel während eines vorbestimmten Intervalls abgestellt bzw. abgeschaltet wird;
in Phase 2 wird die Bereitstellung des Heizteilenergieversorgungsmittels während kurzer Intervalle begonnen und beendet bzw. ein- und ausgeschaltet bzw. im Zyklus ein- und ausgeschaltet wird, um die Temperatur des Heizteils (14) und einen vorbestimmten Wert, der von dem Spannungsdetektor (64) gemessen wird, beizubehalten;
in Phase 3 wird das Heizteilenergieversorgungsmittel während einer vorbestimmten Schätzung der Dauer einer durchschnittlichen Nutzungsaufgabe, im Allgemeinen im Bereich von 5 bis 10 Sekunden angestellt, woraufhin das Heizteilenergieversorgungsmittel während eines vorbestimmten Intervalls abgestellt bzw. abgeschaltet wird;
in Phase 4 wird das Heizteilenergieversorgungsmittel während eines vorbestimmten Intervalls abgestellt bzw. abgeschaltet, damit das Heizteil (14) abkühlen kann.

8. Steuerung bzw. Regelung nach Anspruch 7, wobei die programmierte Mikroprozessorsteuerung bzw. Regelung (50) ein Heizteilspannungssignal Vn empfängt, das verarbeitet und sodann als Vp gespeichert wird, wobei die Verarbeitung aus einem Vergleichen von Vn mit Vp besteht und die Steuerung bzw. Regelung die folgende Phase auf Grundlage der Verarbeitung bestimmt.

9. Steuerung bzw. Regelung nach Anspruch 8, wobei nach Beendigung einer Erfassungssubroutine die Steuerung bzw. Regelung auswählt:
Phase 2, wenn Vn gleich Vp ist,
Phase 3, wenn Vn größer als Vp ist, und
Phase 4, wenn Vn kleiner als Vp ist.

10. Steuerung bzw. Regelung nach Anspruch 6, 7, 8 oder 9, wobei während Phase 2 die Heizteilenergie während eines Intervalls im Bereich von ungefähr 300 bis 400 Millisekunden angestellt bzw. eingeschaltetund sodann während eines Intervalls im Bereich von ungefähr 600 bis 700 Millisekunden abgestellt bzw. abgeschaltet wird.

11. Steuerung bzw. Regelung nach Anspruch 10, wobei während Phase 2 das Beginnen/Beenden der Bereitstellung von Heizteilenergie wiederholt wird.

12. Steuerung bzw. Regelung nach einem der vorhergehenden Ansprüche, des Weiteren umfassend:
einen veränderlichen Widerstand, der mit der programmierten Mikroprozessorsteuerung bzw. Regelung verbunden ist, um einem Bediener zu ermöglichen, die Steuer- bzw. Regeltemperatur des Heizteils (14) zu variieren.

13. Steuerung bzw. Regelung nach einem der Ansprüche 1 bis 12, des Weiteren umfassend:
eine Batteriespannungspegelüberwachung (44), die die Heizvorrichtung abstellt bzw. abgeschaltet, wenn die Batteriespannung einen ausgewählten Pegel nicht übersteigt.

14. Steuerung bzw. Regelung nach einem der Ansprüche 1 bis 12, des Weiteren umfassend:
einen visuellen Anzeiger, der eine Anzeige des Bereitschaftszustandes der Heizvorrichtung bereitstellt.

15. Batteriebetriebene Lötvorrichtung, umfassend:
die Steuerung bzw. Regelung nach einem der Ansprüche 1 bis 12;
ein Griffteil (12);
eine Batterie (22), die in dem Griffteil (12) eingesetzt ist; und
eine Patronenheizspitze (14), die an dem Griffteil (12) gesichert ist.

## Revendications

1. Régulateur pour dispositif de chauffage alimenté par batterie, comprenant un élément chauffant (14) dont la résistance varie avec sa température et une batterie (22) pour alimenter l'élément chauffant, le régulateur comprenant :
un moyen de fourniture d'énergie d'élément chauffant pour fournir une énergie à l'élément chauffant (14) afin de chauffer l'élément chauffant (14) ;
un moyen de fourniture d'énergie de détection pour fournir une énergie à l'élément chauffant (14) afin d'engendrer un signal indicatif de la résistance de l'élément chauffant (14) ;
un moyen de réglage (50) pour régler la température de l'élément chauffant (14),
**caractérisé en ce que** le régulateur comprend en outre :
un sélecteur (42, 54) pour connecter sélectivement le moyen de fourniture d'énergie d'élément chauffant et le moyen de fourniture d'énergie de détection à l'élément chauffant (14) ;
un moyen de détection de tension de batterie (44) pour détecter la tension de la batterie (22) ;
de sorte que le moyen de réglage (50) réponde à un signal de tension de batterie fourni par le moyen de détection de tension de batterie (44) et à un signal indicatif de la résistance de l'élément chauffant (14),
dans lequel le moyen de réglage (50) commande la mise en service du moyen de fourniture d'énergie d'élément chauffant pendant une durée déterminée sur la base de la tension initiale de batterie.

2. Régulateur selon la revendication 1, dans lequel le moyen de réglage (50) comprend un moyen de réglage de temps pour régler la durée de la fourniture d'énergie effectuée par le moyen de fourniture d'énergie d'élément chauffant.

3. Régulateur selon la revendication 1 ou 2, dans lequel le moyen de fourniture d'énergie de détection comprend un moyen de génération de tension constante (40) pour engendrer une tension constante à appliquer à l'élément chauffant (14), et un détecteur de tension (64) pour détecter une tension dépendant de la résistance de l'élément chauffant (14) et de la tension constante.

4. Régulateur selon la revendication 3, dans lequel le moyen de réglage (50) comprend un régulateur à microprocesseur (50) ayant un programme de commande qui fournit cycliquement une énergie au dispositif de chauffage conformément aux STADES suivants :
STADE 1 de mise en service de la fourniture d'énergie ;
STADE 2 de maintien de la température ;
STADE 3 de mise en charge de l'élément chauffant (14) ;
STADE 4 de refroidissement ; et
les STADES 2, 3 et 4 étant effectués dans un ordre quelconque déterminé par le régulateur à microprocesseur programmé (50).

5. Régulateur selon la revendication 4, dans lequel, au STADE 1, le moyen de fourniture d'énergie à l'élément chauffant est arrêté pendant un intervalle prédéterminé et ensuite le régulateur passe au STADE 2.

6. Régulateur selon la revendication 5, comprenant en outre :
un sous-programme de détection dans lequel le moyen de génération de tension constante (40) est mis en service pendant un intervalle de détection, la température de l'élément chauffant (14) est mesurée sur la base d'une tension Vn déterminée par le détecteur de tension (64), et le moyen de génération de tension constante (40) est ensuite arrêté.

7. Régulateur selon la revendication 4, 5 ou 6, comprenant en outre :
au STADE 1, le moyen de fourniture d'énergie à l'élément chauffant est mis en service pendant une durée déterminée par le régulateur à microprocesseur (50) sur la base de la tension initiale de batterie ; ensuite, le moyen de fourniture d'énergie à l'élément chauffant est arrêté pendant un intervalle prédéterminé ;
au STADE 2, le moyen de fourniture d'énergie à l'élément chauffant est cycliquement mis en service et arrêté pendant de courts intervalles pour maintenir la température de l'élément chauffant (14) à une valeur prédéterminée mesurée par le détecteur de tension (64) ;
au STADE 3, le moyen de fourniture d'énergie à l'élément chauffant est mis en service pendant l'estimation prédéterminée de la durée d'un travail d'utilisation moyen, sensiblement dans la plage de 5 à 10 secondes ; ensuite, le moyen de fourniture d'énergie à l'élément chauffant est arrêté pendant un intervalle prédéterminé ;
au STADE 4, le moyen de fourniture d'énergie à l'élément chauffant est arrêté pendant un intervalle prédéterminé pour permettre le refroidissement de l'élément chauffant (14).

8. Régulateur selon la revendication 7, dans lequel le régulateur à microprocesseur programmé (50) reçoit un signal de tension d'élément chauffant « Vn » qui est traité puis mémorisé comme « Vp », le traitement consistant à comparer Vn à Vp, le régulateur déterminant le STADE suivant sur la base du traitement.

9. Régulateur selon la revendication 8, dans lequel, après achèvement d'un sous-programme de détection, le régulateur choisit :
STADE 2 si Vn est égal à Vp,
STADE 3 si Vn est plus grand que Vp, et
STADE 4 si Vn est plus petit que Vp.

10. Régulateur selon la revendication 6, 7, 8 ou 9, dans lequel, pendant STADE 2, l'énergie fournie à l'élément chauffant est mise en service pendant un intervalle dans la plage de 300 à 400 millisecondes environ puis coupée pendant un intervalle dans la plage de 600 à 700 millisecondes environ.

11. Régulateur selon la revendication 10, dans lequel, pendant STADE 2, les cycles marche - arrêt de fourniture d'énergie à l'élément chauffant sont répétés.

12. Régulateur selon une quelconque des revendications précédentes, comprenant en outre :
une résistance variable connectée au régulateur à microprocesseur programmé, afin de permettre à un opérateur de modifier la température réglée de l'élément chauffant (14).

13. Régulateur selon une quelconque des revendications 1 à 12, comprenant en outre :
un indicateur de niveau de tension de batterie (44) pour arrêter le dispositif de chauffage si la tension de batterie ne dépasse pas une valeur choisie.

14. Régulateur selon une quelconque des revendications 1 à 12, comprenant en outre :
un indicateur visuel pour fournir une indication de l'état de préparation du dispositif de chauffage.

15. Dispositif de soudage alimenté par batterie, comprenant :
le régulateur selon une quelconque des revendications 1 à 12 ;
une poignée (12) ;
une batterie (22) insérée dans la poignée (12) ; et
un embout de chauffage à cartouche (14) fixé à la poignée (12).
